# FASCICULE DE BREVET EUROPEEN

(11) **EP 4 496 717 B1**
(45) Date de publication et mention de la délivrance du brevet: **06.05.2026**
(21) Numéro de dépôt: 23712895.4
(22) Date de dépôt: 22.03.2023
(51) Int. Cl.: B60C 1/00, C08C 19/22, C08C 19/25, C08C 19/44, C08F 236/06, C08F 236/10, C08L 7/00, C08L 9/06

(54) **COMPOSITION ÉLASTOMÉRIQUE AUX PROPRIÉTÉS AMÉLIORÉES**
ELASTOMERZUSAMMENSETZUNG MIT VERBESSERTEN EIGENSCHAFTEN
ELASTOMER COMPOSITION WITH IMPROVED PROPERTIES

(30) Priorité: 23.03.2022 FR 2202586
(43) Date de publication de la demande: 29.01.2025
(73) Titulaire: COMPAGNIE GENERALE DES ETABLISSEMENTS MICHELIN, 63000 Clermont-Ferrand (FR)
(72) Inventeur: LAGARDE, Patricia, 63040 CLERMONT-FERRAND CEDEX 09 (FR)
(74) Mandataire: M.F.P. Michelin
(86) Numéro de dépôt international: PCT/EP2023/057308
(87) Numéro de publication internationale: WO 2023/180370

(56) Documents cités:
- DE-A1- 102014 202 748
- US-A1- 2016 115 305
- US-A1- 2018 346 694

## Description

Le domaine de la présente invention est celui des compositions élastomériques, plus particulièrement des compositions élastomériques pour les bandes de roulements, en particulier de pneumatiques pour les véhicules portant de lourdes charges, tels que, par exemple les camions, les tracteurs, les véhicules de génie civil, les remorques ou bus routiers.

Les pneumatiques pour les véhicules portant de lourdes charges sont pourvus de bandes de roulement qui présentent, par rapport aux bandes de roulement des pneumatiques de véhicules légers, en particulier de véhicules tourisme ou de véhicules camionnette, de grandes épaisseurs de matériau caoutchoutique, notamment pour supporter le poids que ces véhicules transportent. Typiquement, la partie usante de la bande de roulement d'un véhicule portant de lourdes charges peut avoir une épaisseur d'au moins 15 mm, celle d'un véhicule génie civil d'au moins 30 mm, voire jusqu'à 120 mm.

Au cours du roulage, la bande de roulement de ce type de pneumatique subit des sollicitations mécaniques et des agressions résultant du contact direct avec le sol. En effet, l'usage de ces pneumatiques sur des terrains présentant de nombreux cailloux et autres corps ou des nids-de-poule, génère des agressions de la bande de roulement. Dans le cas d'un pneumatique monté sur un véhicule portant de lourdes charges, les sollicitations mécaniques et les agressions subies par le pneumatique se trouvent amplifiées sous l'effet du poids porté par ce pneumatique. Ceci a pour conséquence que des chocs répétitifs peuvent provoquer des arrachements de matière de la bande de roulement. Il est donc nécessaire que les bandes de roulement des pneumatiques des véhicules portant de lourdes charges présentent une bonne résistance à la fissuration.

Pour résoudre ce problème, les manufacturiers de pneumatiques pour ce type de véhicules ont l'habitude d'utiliser du caoutchouc naturel, comme élastomère majoritaire, en mélange avec un polybutadiène, dans les compositions élastomériques pour ces bandes de roulement en raison des propriétés de résistance à la fissuration que possède spécifiquement le caoutchouc naturel.

Par ailleurs, certains véhicules portant des lourdes charges sont également destinés à rouler sur des trajets de plus en plus longs, du fait de l'amélioration du réseau routier et de la croissance de ce réseau dans le monde. L'usure de la bande de roulement de ces pneumatiques doit donc être la plus réduite possible pour une distance de parcours donnée.

Afin de réduire l'usure de la bande de roulement de ce type de pneumatiques, il est connu d'utiliser habituellement du noir de carbone comme charge renforçante dans les compositions élastomériques de bande de roulement ; cette charge renforçante apportant une certaine rigidité à la composition élastomérique.

Or, il est connu de l'homme du métier que l'amélioration d'une propriété d'une bande de roulement s'effectue la plupart du temps au détriment d'autres propriétés. En effet, l'amélioration des propriétés de rigidité s'effectue souvent au détriment de la résistance à la fissuration.

Ainsi, les manufacturiers cherchent toujours des solutions pour améliorer d'avantage un compromis de propriétés que sont la résistance à l'usure et la résistance à la fissuration pour un pneumatique de véhicule portant de lourdes charges.

Le document WO2020214178 décrit des compositions élastomériques pour des bandes de roulement comprenant 60 pce de caoutchouc naturel, 40 pce d'un copolymère de styrène et de butadiène fonctionnalisé et 60 pce de silice ; cette composition élastomérique permet d'obtenir une bonne rigidité de la bande de roulement et une bonne résistance à l'usure.

Par ailleurs, une autre performance à laquelle doivent satisfaire les bandes de roulement de pneumatiques de véhicules portant de lourdes charges est une bonne adhérence sur sol mouillé. Or, il est connu que les pneumatiques qui présentent une bonne adhérence sur sol mouillé présentent habituellement une résistance à l'usure pénalisée.

Il existe donc toujours un besoin d'améliorer encore plus le compromis résistance à l'usure/ résistance à la fissuration sans que soit pénalisée l'adhérence sur sol mouillé.

Le but de la présente invention est de répondre à ce besoin.

Poursuivant ses recherches, la Demanderesse a découvert de façon inattendue que, pour des pneumatiques de véhicules portant de lourdes charges, l'utilisation combinée d'un élastomère diénique fonctionnel spécifique, avec un élastomère diénique non fonctionnel spécifique et un caoutchouc isoprénique, permettait d'améliorer d'avantage le compromis de performance résistance à l'usure/ résistance à la fissuration tout en améliorant les propriétés d'adhérence sur sol mouillé d'une composition élastomérique pour bande de roulement.

Ainsi, l'invention a pour objet une composition élastomérique à base de :
a. 7 à 45 pce d'un premier élastomère diénique, ledit premier élastomère diénique étant un élastomère isoprénique,
b. 10 à 45 pce d'un second élastomère diénique, ledit second élastomère diénique étant un copolymère de butadiène et de monomères vinylaromatiques, lequel copolymère comprenant au sein de sa structure au moins un groupe alcoxysilane lié à l'élastomère par l'atome de silicium, et au moins une fonction comprenant un atome d'azote, et présentant une température de transition vitreuse strictement inférieure à -70°C,
c. 10 à 55 pce d'un troisième élastomère diénique non fonctionnalisé, ledit troisième élastomère diénique non fonctionnalisé étant un copolymère de butadiène et de monomères vinylaromatiques ayant une température de transition vitreuse strictement supérieure à -65°C et inférieure ou égale à -30°C,
d. 0 à 5 pce d'un quatrième élastomère diénique, ledit quatrième élastomère diénique étant un polybutadiène,
e. 40 à 85 pce de silice à titre de charge renforçante,
f. au moins un agent de couplage de la silice à au moins l'un desdits élastomères diéniques,
g. 0 à 9 pce d'au moins un plastifiant,
h. au moins un système de réticulation.

Préférentiellement, le taux du premier élastomère diénique dans la composition élastomérique est compris dans un domaine allant de 8 à 43 pce, plus préférentiellement est compris dans un domaine allant de 10 à 40 pce.

Préférentiellement, le taux du second élastomère diénique dans la composition élastomérique est compris dans un domaine allant de 15 à 40 pce, plus préférentiellement est compris dans un domaine allant de 20 à 37 pce.

Préférentiellement, le taux du troisième élastomère diénique dans la composition élastomérique est compris dans un domaine allant de 20 à 53 pce, plus préférentiellement est compris dans un domaine allant de 30 à 50 pce.

Préférentiellement, le premier élastomère diénique est choisi dans le groupe constitué par le caoutchouc naturel, les polyisoprènes de synthèse et le mélange de ces élastomères, de préférence le premier élastomère est le caoutchouc naturel.

Préférentiellement, le second élastomère diénique a une température de transition vitreuse comprise dans un domaine allant de -110°C à moins de -70°C, de préférence allant de -100°C à -75°C, plus préférentiellement encore allant de -95°C à -80°C.

Préférentiellement, le troisième élastomère diénique non fonctionnalisé a une température de transition vitreuse comprise dans un domaine allant de -60°C à -40°C, de préférence allant de - 50°C à -40°C.

Préférentiellement, la fonction comprenant un atome d'azote est portée par le groupe alcoxysilane par l'intermédiaire d'un groupe espaceur qui est un alcanediyle en C1-C10, plus préférentiellement un alcanediyle en C1-C4.

Préférentiellement, la fonction comprenant l'atome d'azote est une amine ternaire, plus particulièrement la diéthylamine ou diméthylamine.

Préférentiellement, le taux de monomères vinylaromatiques dans le second élastomère diénique est compris dans un domaine allant de 0,5 à 5% en poids par rapport au poids dudit second élastomère diénique, plus préférentiellement dans un domaine allant de 1 à 4% en poids.

Préférentiellement, le groupe alcoxysilane est un méthoxysilane ou un éthoxysilane, éventuellement partiellement ou totalement hydrolysé en silanol.

Préférentiellement, le taux de silice dans la composition élastomérique est compris dans un domaine allant de 45 à 80 pce, plus préférentiellement allant de 50 à 75 pce.

Préférentiellement, la composition élastomérique ne comprend pas de polybutadiène.

Préférentiellement, la composition élastomérique ne comprend pas de plastifiant.

Préférentiellement, la composition élastomérique comprend en outre de 0,5 à 15 pce de noir de carbone, plus préférentiellement de 0,7 à 10 pce de noir de carbone, plus préférentiellement encore de 1 à 4 pce de noir de carbone.

Un autre objet de la présente invention est une bande de roulement comprenant au moins une composition élastomérique définie ci-dessus, y compris ses formes préférentielles.

Un autre objet de la présente invention est un pneumatique de véhicule portant de lourdes charges comprenant au moins une composition élastomérique définie ci-dessus, y compris ses formes préférentielles ou comprenant une bande de roulement telle que définie ci-dessus.

### DESCRIPTION DETAILLEE

### Définitions

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé « minoritaire » est un composé qui ne représente pas la fraction massique la plus grande parmi les composés du même type. De préférence par majoritaire, on entend présent à plus de 50% en poids, de préférence plus de 60%, 70%, 80%, 90% en poids, et plus préférentiellement le composé « majoritaire » représente 100% en poids par rapport au poids total des composés du même type.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Evidemment, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

On entend, par « pneumatique de véhicule portant de lourdes charges », des pneumatiques, notamment à armature de carcasse radiale, pour les véhicules portant de lourdes charges, tels que, par exemple les camions, les tracteurs, les remorques ou bus routiers, équipés de roues dont les jantes présentent un diamètre nominal supérieur ou égal à 19,5 pouces. Un véhicule portant des lourdes charges se distingue par le dimensionnement de son ou ses essieux et notamment par le poids total autorisé en charge qui est supérieur ou égal à 3,5 tonnes.

On entend par « bande de roulement », la couche externe du pneumatique qui est en contact direct avec la surface de roulement.

Par élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non). Dans la présente demande, les élastomères diéniques sont par définition non thermoplastiques. De préférence, lorsque les élastomères diéniques sont des copolymères, ce sont des polymères statistiques.

### Premier élastomère A diénique

La composition élastomérique de l'invention comprend, à titre de premier élastomère diénique (noté premier élastomère A diénique dans la suite de la description), un élastomère isoprénique à un taux compris dans un domaine allant de 7 à 45 pce, plus préférentiellement à un taux compris dans un domaine allant de 8 à 43 pce, plus préférentiellement encore à un taux compris dans un domaine allant de 10 à 40 pce.

Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les copolymères d'isobutène-isoprène (caoutchouc butyle - IIR), les copolymères d'isoprène-styrène (SIR) et les mélanges de ces élastomères.

Préférentiellement, le premier élastomère A diénique est choisi dans le groupe constitué par le caoutchouc naturel, les polyisoprènes de synthèse et le mélange de ces élastomères. Plus préférentiellement encore, le premier élastomère A diénique est choisi dans le groupe constitué par le caoutchouc naturel, les polyisoprènes cis-1,4 de synthèse et le mélange de ces élastomères. Plus préférentiellement encore, le premier élastomère A diénique est choisi dans le groupe constitué par le caoutchouc naturel, les polyisoprènes cis-1,4 de synthèse ayant un taux (% molaire) de liaisons cis-1,4 supérieur à 90%, plus préférentiellement encore supérieur à 98% et le mélange de ces élastomères. Le taux de liaisons cis-1,4 peut être mesuré par la technique de spectroscopie proche infrarouge (NIR).

De manière plus préférentielle encore, le premier élastomère A diénique est le caoutchouc naturel.

### Second élastomère B diénique

La composition élastomérique de l'invention comprend, à titre de second élastomère diénique (noté second élastomère B diénique ou second élastomère B diénique fonctionnalisé), un élastomère diénique fonctionnalisé qui est un copolymère de butadiène et de monomères vinylaromatiques, lequel copolymère comprenant au sein de sa structure au moins un groupe alcoxysilane lié à l'élastomère par l'atome de silicium, et au moins une fonction comprenant un atome d'azote ; et ledit copolymère présentant une température de transition vitreuse strictement inférieure à -70°C.

Plus préférentiellement encore, le second élastomère B diénique fonctionnalisé a une température de transition vitreuse comprise dans un domaine allant de -110°C à moins de - 70°C, de préférence allant de -100°C à -75°C, plus préférentiellement encore allant de -95°C à -80°C. La température dudit élastomère B diénique fonctionnalisé est mesurée selon la norme ASTM D3418-08 (2008).

Par élastomère diénique fonctionnalisé, on entend un élastomère diénique porteur d'au moins une fonction chimique capable d'interagir avec une charge renforçante. Pour l'élastomère B diénique fonctionnalisé, la fonction chimique capable d'interagir avec la charge renforçante est le groupe alcoxysilane porteur au moins d'une fonction comprenant un atome d'azote.

A titre de monomères vinylaromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

De préférence, le monomère vinylaromatique est le styrène.

Donc plus préférentiellement, l'élastomère B diénique est un copolymère de butadiène et de styrène, lequel copolymère comprenant au sein de sa structure au moins un groupe alcoxysilane lié à l'élastomère par l'atome de silicium, et au moins une fonction comprenant un atome d'azote ; ledit copolymère présentant une température de transition vitreuse strictement inférieure à -70°C ; plus préférentiellement ledit copolymère a une température de transition vitreuse comprise dans un domaine allant de -110°C à moins de -70°C, de préférence allant de -100°C à -75°C, plus préférentiellement encore allant de -95°C à -80°C.

Préférentiellement, le taux de monomères vinylaromatiques dans l'élastomère B diénique fonctionnalisé est compris dans un domaine allant de 0,5% à 5% en poids, plus préférentiellement de 1% à 4% en poids par rapport au poids total dudit élastomère B. Le taux de monomères butadiénique dans l'élastomère B diénique fonctionnalisé est compris dans un domaine allant de 95% à 99,5% en poids, plus préférentiellement de 96% à 99% en poids par rapport aux poids total dudit élastomère B. Le taux de liaisons vinyliques de la partie butadiénique est compris dans un domaine allant de 8% à 15% en poids, plus préférentiellement allant de 10 à 15% en poids par rapport au poids de la partie butadiénique. Le taux de monomères butadiène, le taux d'unité vinylique de la partie butadiénique et/ou le taux de monomères vinylaromatiques peuvent être mesurés par la technique de spectroscopie proche infrarouge (NIR).

Le taux du second élastomère B diénique fonctionnalisé dans la composition élastomérique est compris dans un domaine allant de 10 à 45 pce, plus préférentiellement est compris dans un domaine allant de 15 à 40 pce, plus préférentiellement encore dans un domaine allant de 20 à 37 pce.

Le second élastomère B diénique fonctionnalisé, c'est-à-dire le copolymère de butadiène et de monomères vinylaromatiques tel que défini ci-dessus, de préférence le SBR fonctionnalisé défini ci-dessus, peut avoir toute microstructure qui est fonction des conditions de polymérisation utilisées et qui soit compatible avec sa température de transition vitreuse telle que définie ci-dessus. Il peut être préparé en émulsion ou en solution, de préférence il est préparé en solution.

De préférence, le second élastomère B diénique fonctionnalisé est un copolymère styrène-butadiène présentant l'une quelconque, avantageusement la combinaison de deux ou trois, encore plus avantageusement la totalité, des caractéristiques suivantes :
- il est préparé en solution (S-SBR),
- sa teneur en poids en styrène par rapport au poids total du copolymère styrène-butadiène est comprise dans un domaine allant de 0,5 à 5%, de préférence de 1 à 4%, le taux de styrène étant déterminé par la technique de spectroscopie proche infrarouge (NIR),
- sa teneur en poids en liaisons vinyliques de la partie butadiénique comprise dans un domaine allant de 8 à 15%, plus préférentiellement de 10 à 15% par rapport au poids de la partie butadiénique; le taux liaisons vinyliques de la partie butadiénique étant déterminé par la technique de spectroscopie proche infrarouge (NIR).

Le second élastomère B diénique fonctionnalisé comprend au sein de sa structure au moins un groupe alcoxysilane lié à l'élastomère par l'intermédiaire de l'atome de silicium, et une fonction comprenant un atome d'azote.

Dans la présente description, la notion de groupe alcoxysilane situé au sein de la structure de l'élastomère s'entend comme un groupe dont l'atome de silicium est situé dans le squelette du polymère et directement relié à celui-ci. Ce positionnement au sein de la structure comprend les extrémités de chaînes polymères. Ainsi, le groupement terminal est inclus dans cette notion. Le groupe alcoxysilane n'est pas un groupe pendant.

Lorsque le groupe alcoxysilane se situe en bout de chaîne, on dira alors que l'élastomère diénique est fonctionnalisé en bout ou extrémité de chaîne.

Lorsque le groupe alcoxysilane se situe dans la chaîne élastomère principale, on dira alors que l'élastomère diénique est couplé ou encore fonctionnalisé en milieu de chaîne, par opposition à la position « en extrémité de chaîne » et bien que le groupement ne se situe pas précisément au milieu de la chaîne élastomère. L'atome de silicium de cette fonction lie les deux branches de la chaîne principale de l'élastomère diénique.

Lorsque l'atome de silicium est en position centrale auquel au moins trois branches élastomères sont liées formant une structure en étoile de l'élastomère, on dira alors que l'élastomère diénique est étoilé. L'atome de silicium est ainsi substitué par au moins trois branches de l'élastomère diénique.

Il convient de préciser qu'il est connu de l'homme du métier que lorsqu'un élastomère est modifié par réaction d'un agent de fonctionnalisation sur l'élastomère vivant issu d'une étape de polymérisation anionique, on obtient un mélange d'espèces modifiées de cet élastomère dont la composition dépend des conditions de la réaction de modification et notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Avantageusement, le second élastomère B diénique fonctionnalisé comprend à titre d'espèce majoritaire l'élastomère diénique fonctionnalisé en milieu de chaîne par un groupe alcoxysilane lié aux deux branches de l'élastomère diénique par l'intermédiaire de l'atome de silicium, le radical alcoxy étant éventuellement partiellement ou totalement hydrolysé en hydroxyle. Ainsi le second élastomère diénique est majoritairement fonctionnalisé en milieu de chaîne par le groupe alcoxysilane. Plus particulièrement encore, l'élastomère diénique fonctionnalisé en milieu de chaîne par un groupe alcoxysilane représente 70% en poids du second élastomère diénique B. De préférence, l'élastomère diénique fonctionnalisé en étoile par un groupe alcoxysilane représente de 0 à 30% en poids du second élastomère diénique B.

On entend par « groupe alcoxysilane interagissant de manière privilégiée avec la charge renforçante » ou « fonction susceptible d'interagir avec une charge renforçante », tout groupe alcoxysilane ou fonction autre, préférentiellement amine, capable de former, au sein d'une composition élastomérique renforcée au moyen d'une charge, une liaison physique ou chimique avec ladite charge. Cette interaction peut s'établir par exemple par le biais de liaisons covalentes, hydrogène, ioniques et/ou électrostatiques entre ladite fonction et des fonctions présentes sur des charges.

Le radical alcoxyle du groupe alcoxysilane peut comprendre un radical alkyle en C₁-C₁₀, voire en C₁-C₈, de préférence en C₁-C₄, plus préférentiellement le radical alcoxyle est un méthoxy ou un éthoxy.

Le groupe alcoxysilane peut être éventuellement partiellement ou totalement hydrolysé en hydroxyle.

Le second élastomère B diénique fonctionnalisé comprend au moins une fonction comprenant un atome d'azote. La fonction comprenant un atome d'azote peut être portée par le silicium du groupe alcoxysilane directement ou par l'intermédiaire d'un groupe espaceur. Le groupement espaceur peut être un atome, notamment un hétéroatome, ou un groupe d'atomes.

Préférentiellement, le groupement espaceur peut être un radical hydrocarboné divalent, linéaire ou ramifié, aliphatique en C₁-C₁₈, saturé ou non, cyclique ou non, ou un radical hydrocarboné divalent aromatique en C₆-C₁₈ et peut contenir un ou plusieurs radicaux aromatiques et/ou un ou plusieurs hétéroatomes. Le radical hydrocarboné peut éventuellement être substitué.

Avantageusement le groupement espaceur est un radical hydrocarboné divalent, linéaire ou ramifié, aliphatique en C₁-C₁₈, plus préférentiellement un radical hydrocarboné divalent aliphatique en C₁-C₁₀, plus préférentiellement encore un radical hydrocarboné divalent linéaire en C₁-C₄. Plus préférentiellement encore, la fonction comprenant un atome d'azote est portée par le groupe alcoxysilane par l'intermédiaire d'un groupe espaceur qui est un alcanediyle en C₁-C₁₀, plus préférentiellement un alcanediyle en C₁-C₄.

Préférentiellement, le groupe alcoxysilane dudit élastomère B diénique fonctionnel peut être représenté par la formule :

(*-)ₐSi(OR')_{b}R_{c}X

dans laquelle,
- *- représente la liaison à une chaîne élastomère ;
- le radical R représente un radical alkyle substitué ou non substitué, étant en C₁-C₁₀, voire en C₁-C₈, de préférence un radical alkyle en C₁-C₄, plus préférentiellement méthyle et éthyle ;
- dans les radicaux alcoxyle de formule -OR', éventuellement partiellement ou totalement hydrolysés en hydroxyle, R' représente un radical alkyle, substitué ou non substitué, étant en C₁-C₁₀, voire en C₁-C₈, de préférence un radical alkyle en C₁-C₄, plus préférentiellement méthyle et éthyle ;
- X représente un groupement comprenant la fonction azotée ;
- a vaut 1 ou 2, b vaut 1 ou 2, et c vaut 0 ou 1 sous réserve que a + b + c = 3.

L'homme du métier comprendra que la valeur de a est fonction du positionnement du groupe alcoxysilane au sein de la structure de l'élastomère. Lorsque a vaut 1, le groupe est situé en extrémité de chaîne. Lorsque a vaut 2, il est situé en milieu de chaîne.

On peut citer, à titre de fonction comprenant un atome d'azote, les fonctions amines. Conviennent particulièrement les amines primaires, protégées ou non par un groupement protecteur, les amines secondaires, protégées ou non par un groupement protecteur, ou les amines tertiaires.

Ainsi, à titre de fonction amine secondaire ou tertiaire, on peut citer les amines substituées par des radicaux alkyle en C₁-C₁₀, de préférence alkyle en C₁-C₄, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

De préférence, la fonction comprenant d'un atome d'azote est une amine tertiaire, de préférence la diéthylamine ou la diméthylamine.

Avantageusement, au moins deux, de préférence au moins trois, de préférence au moins quatre, de préférence encore l'ensemble des caractéristiques suivantes sont respectées :
- la fonction comprenant un atome d'azote est une amine tertiaire, plus particulièrement la diéthylamine ou la diméthylamine,
- la fonction comprenant un atome d'azote est portée par le groupe alcoxysilane par l'intermédiaire d'un groupement espaceur défini comme un radical hydrocarboné aliphatique en C₁-C₁₀, plus préférentiellement encore le radical hydrocarboné linéaire en C₁-C₄, plus préférentiellement le groupe espaceur est un alcanediyle en C₁-C₁₀, plus préférentiellement un alcanediyle en C₁-C₄,
- le groupe alcoxysilane est un méthoxysilane ou un éthoxysilane, éventuellement partiellement ou totalement hydrolysé en silanol,
- le second élastomère B diénique est un copolymère butadiène-styrène,
- le second élastomère B diénique est majoritairement fonctionnalisé en milieu de chaîne par un groupe alcoxysilane lié aux deux branches du second élastomère diénique par l'intermédiaire de l'atome de silicium,
- le second élastomère B diénique présente une température de transition vitreuse comprise dans un domaine allant de -105°C à moins de -70°C.

De manière particulièrement préférée, au moins deux, de préférence au moins trois, de préférence au moins quatre, de préférence encore l'ensemble des caractéristiques suivantes sont respectées :
- la fonction comprenant un atome d'azote est une amine tertiaire, plus particulièrement la diéthylamine ou la diméthylamine,
- la fonction comprenant un atome d'azote est portée par le groupe alcoxysilane par l'intermédiaire d'un alcanediyle en C₁-C₄,
- le groupe alcoxysilane est le méthoxysilane ou l'éthoxysilane, éventuellement partiellement ou totalement hydrolysé en silanol,
- le second élastomère B diénique est un copolymère butadiène-styrène,
- le second élastomère B diénique est majoritairement fonctionnalisé en milieu de chaîne par un groupe alcoxysilane lié aux deux branches du second élastomère diénique par l'intermédiaire de l'atome de silicium,
- le second élastomère B diénique présente une température de transition vitreuse comprise dans un domaine allant de -95°C à -80°C.

Le second élastomère diénique peut être obtenu, par exemple, par un procédé tel que décrit dans le document WO2017060395.

Préférentiellement, ce second élastomère B diénique fonctionnalisé n'est pas un élastomère étendu avec une huile d'extension.

### Troisième élastomère C diénique

La composition élastomérique de l'invention comprend un troisième élastomère diénique non-fonctionnalisé (noté troisième élastomère C diénique ou troisième élastomère C diénique non fonctionnalisé) qui est un copolymère de butadiène et de monomères vinylaromatiques, ayant une température de transition vitreuse strictement supérieure à -65°C et inférieure ou égale à - 30°C, plus préférentiellement ayant une température de transition vitreuse comprise dans un domaine allant de -60°C à -40°C, de préférence allant de -50°C à -40°C. La température de transition vitreuse de l'élastomère C diénique non fonctionnalisé est mesurée selon la norme ASTM D3418-08 (2008).

Par élastomère diénique non fonctionnalisé, on entend un élastomère diénique qui ne comprend pas de fonction susceptible d'interagir avec une charge renforçante. Autrement dit, l'élastomère diénique non fonctionnalisé ne comprend pas d'hétéroatome tels que O, N, S, P et Sn.

Le taux de ce troisième élastomère C diénique non fonctionnalisé dans la composition élastomérique est compris dans un domaine allant de 10 à 55 pce, plus préférentiellement est compris dans un domaine allant de 20 à 53 pce, plus préférentiellement encore est compris dans un domaine allant de 30 à 50 pce.

Le troisième élastomère C diénique non fonctionnalisé résulte de la polymérisation de monomères de butadiène et de monomères vinylaromatiques. A titre de monomères vinylaromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène. De préférence, le monomère vinylaromatique du troisième élastomère C diénique est le styrène.

Parmi les copolymères à base de butadiène et de monomères vinylaromatiques, on peut citer notamment ceux ayant une teneur en monomères vinylaromatiques, de préférence en styrène, comprise entre 5% et 60% en poids, et plus particulièrement entre 20% et 50% en poids par rapport au poids dudit copolymère, une teneur molaire (% molaire) en liaisons -1,2 de la partie butadiénique comprise entre 4% et 75%, une teneur molaire (% molaire) en liaisons trans-1,4 de la partie butadiénique comprise entre 10% et 80%. La teneur en styrène en poids, la teneur molaire des liaisons -1,2 de la partie butadiénique et la teneur molaire en liaison trans-1,4 sont mesurées par spectroscopie proche infrarouge (NIR).

Bien entendu, le troisième élastomère C diénique non-fonctionnalisé est différent du second élastomère B diénique fonctionnalisé, notamment en termes de microstructure et de température de transition vitreuse.

Préférentiellement, le troisième élastomère C diénique non-fonctionnel n'est pas un élastomère étendu avec une huile d'extension.

Ce troisième élastomère diénique est obtenu par des techniques habituelles de polymérisation que l'homme du métier saura adapter pour obtenir la bonne microstructure et la température de transition vitreuse telle que mentionnée ci-dessus.

Le troisième élastomère C diénique est également disponible commercialement auprès des fournisseurs d'élastomères.

### Quatrième élastomère D diénique

La composition élastomérique de l'invention peut optionnellement comprendre un quatrième élastomère diénique (noté élastomère D diénique) qui est un polybutadiène, par exemple, à un taux compris dans un domaine allant de 0 à 5 pce. En d'autres termes, la composition élastomérique de l'invention ne comprend pas de polybutadiène ou en a une teneur inférieure ou égale à 5 pce.

Plus préférentiellement, lorsqu'il est présent, ce quatrième élastomère diénique est un polybutadiène cis-1,4 ; notamment un polybutadiène ayant un taux (% molaire) de liaisons cis-1,4 supérieur à 90%, plus préférentiellement encore ayant un taux (% molaire) de liaisons cis-1,4supérieur à 96%.

Lorsque la composition élastomérique de l'invention comprend quatre élastomères diéniques différents les uns des autres, il est entendu que le taux total du premier, du deuxième, du troisième et du quatrième élastomère diénique est avantageusement compris dans un domaine allant de 90 à 100 pce, de préférence allant de 95 à 100 pce, plus préférentiellement encore ce taux est égal à 100 pce.

Préférentiellement, la composition élastomérique ne comprend pas de polybutadiène à titre de quatrième élastomère diénique. Lorsque la composition élastomérique de l'invention comprend trois élastomères diéniques différents les uns des autres, il est entendu que le taux total du premier, du deuxième et du troisième élastomère diénique est avantageusement compris dans un domaine allant de 90 à 100 pce, de préférence allant de 95 à 100 pce, plus préférentiellement encore ce taux est égal à 100 pce. Préférentiellement, le taux du premier élastomère diénique dans la composition élastomérique est compris dans un domaine allant de 7 à 45 pce, le taux du second élastomère diénique est compris dans un domaine allant de 15 à 40 pce, le taux du troisième élastomère diénique est compris dans un domaine allant de 30 à 50 pce, le taux du quatrième élastomère diénique est compris dans un domaine allant de 0 à 5 pce, le taux total des élastomères diénique étants de 100 pce.

Préférentiellement, le taux du premier élastomère diénique dans la composition élastomérique est compris dans un domaine allant de 10 à 40 pce, le taux du second élastomère diénique est compris dans un domaine allant de 15 à 40 pce, le taux du troisième élastomère diénique est compris dans un domaine allant de 20 à 53 pce, le taux du quatrième élastomère diénique est compris dans un domaine allant de 0 à 5 pce, le taux total des élastomères diénique étants de 100 pce.

Préférentiellement, le taux du premier élastomère diénique dans la composition élastomérique est compris dans un domaine allant de 10 à 40 pce, le taux du second élastomère diénique est compris dans un domaine allant de 20 à 37 pce, le taux du troisième élastomère diénique est compris dans un domaine allant de 30 à 50 pce, le taux du quatrième élastomère diénique est compris dans un domaine allant de 0 à 5 pce, le taux total des élastomères diénique étants de 100 pce.

La combinaison de ces différents types spécifiques d'élastomères diéniques tels que décrit ci-dessus en association avec de la silice et un agent de couplage de la silice à au moins l'un desdits élastomères diéniques et un faible taux de plastifiants permet d'obtenir des compositions élastomériques qui de manière surprenante présente une amélioration du compromis résistance à la fissuration/ résistance à l'usure sans que soit pénalisée l'adhérence sur sol mouillé.

La composition élastomérique de l'invention peut également contenir, de manière minoritaire, tout type d'élastomère synthétique autre que diénique, voire des polymères autres que des élastomères, par exemple des polymères thermoplastiques. De préférence, la composition élastomérique ne contient pas d'élastomère synthétique autre que diénique ni de polymère autre que des élastomères ou en contient moins de 10 pce, de préférence moins de 5 pce.

### Silice charge renforçante

La composition élastomérique de l'invention comprend de la silice à titre de charge renforçante, à un taux compris dans un domaine allant de 45 à 85 pce, plus préférentiellement allant de 45 à 80 pce, plus préférentiellement encore de 50 à 75 pce.

Les silices utilisables dans le cadre de l'invention peuvent être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g.

La surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Les valeurs de surface spécifique CTAB de la silice ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

De préférence, la silice présente une surface spécifique BET inférieure à 200 m²/g et/ou une surface spécifique CTAB est inférieure à 220 m²/g, de préférence une surface spécifique BET comprise dans un domaine allant de 125 à 210 m²/g et/ou une surface spécifique CTAB comprise dans un domaine allant de 140 à 210 m²/g.

On peut utiliser tout type de silice précipitée, notamment des silices précipitées hautement dispersibles (dites « HDS » pour « highly dispersible » ou « highly dispersible silica »). Ces silices précipitées, hautement dispersibles, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay.

La composition élastomérique de l'invention peut comprendre en outre du noir de carbone.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Lorsque la composition élastomérique comprend un noir de carbone, le taux de noir de carbone dans la composition élastomérique est toujours inférieur au taux de silice. Autrement dit la silice est la charge renforçante majoritaire. Elle représente plus de 50% en poids du poids total de la charge renforçante, c'est-à-dire le poids total correspond à la somme du poids de la silice et du poids du noir de carbone.

Le noir de carbone, lorsqu'il est présent dans la composition élastomérique, peut être utilisé de préférence à un taux inférieur ou égal à 15 pce, de préférence inférieur ou égale à 10 pce, de préférence inférieur ou égal à 5 pce. De préférence, le taux du noir de carbone dans la composition élastomérique peut aller de 0,5 à 15 pce, plus préférentiellement de 0,7 à 10 pce, plus préférentiellement encore de 1 à 4 pce.

Agent de couplage de la silice à un élastomère diénique de la matrice élastomérique

Pour coupler la silice renforçante à au moins l'un des élastomères diéniques de la composition élastomèrique, on utilise de manière bien connue un agent de couplage (ou agent de liaison) au moins bifonctionnel destiné à assurer une connexion suffisante, de nature chimique et/ou physique, entre la silice (surface de ses particules) et le ou les élastomères diéniques. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6,849,754, WO 99/09036, WO 2006/023815, WO 2007/098080, WO 2010/072685 et WO 2008/055986.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré. Bien entendu pourraient être également utilisés des mélanges des agents de couplage précédemment décrits.

La teneur en agent de couplage de la silice à au moins l'un des élastomères diéniques dans la composition élastomérique est avantageusement inférieure ou égale à 35 pce, étant entendu qu'il est en général souhaitable d'en utiliser le moins possible. Typiquement le taux d'agent de couplage est préférentiellement compris dans un domaine allant de 0,5 à 20 pce, plus préférentiellement compris dans un domaine allant de 2 à 12 pce. Ce taux est aisément ajusté par l'homme du métier selon le taux de silice utilisé dans la composition élastomérique.

### Plastifiant

La composition élastomérique de l'invention peut être dépourvue de plastifiant ou alors peut comprendre au moins un plastifiant à un taux inférieur ou égal à 9 pce, plus préférentiellement à un taux inférieur ou égal à 5 pce. En d'autres termes, la composition élastomérique de l'invention ne comprend pas de plastifiant ou en a une teneur inférieure ou égale à 9 pce, plus préférentiellement en a une teneur inférieure ou égale à 5 pce.

Préférentiellement, lorsque le plastifiant est présent dans la composition élastomérique, il est choisi dans le groupe constitué par les résines plastifiantes de haute Tg, les huiles plastifiantes et leurs mélanges.

Par définition, une huile plastifiante est liquide à température ambiante (c'est-à-dire pour rappel, que c'est une substance ayant la capacité à prendre à terme la forme de son contenant) par opposition à une résine hydrocarbonée de haute Tg, qui est par définition un solide à température et pression ambiantes (20°C, 1 atm). Une résine plastifiante dite de haute Tg est une résine thermoplastique dont la Tg est strictement supérieure à 20°C.

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants ou agents tackifiants dans des matrices polymériques. Elles sont par nature au moins partiellement miscibles (i.e., compatibles) aux taux utilisés avec les compositions de polymères auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »). De manière connue, ces résines hydrocarbonées peuvent être qualifiées aussi de résines thermoplastiques en ce sens qu'elles se ramollissent par chauffage et peuvent ainsi être moulées. Le point de ramollissement des résines hydrocarbonées est mesuré selon la norme ISO 4625 (méthode « Ring and Ball »). La Tg est mesurée selon la norme ASTM D3418-08 (2008). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes « WATERS » en série (« STYRAGEL » HR4E, HR1 et HR0.5) ; détection par réfractomètre différentiel (« WATERS 2410 ») et son logiciel d'exploitation associé ("WATERS EMPOWER"). Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

De préférence, la résine plastifiante hydrocarbonée de haute Tg, lorsqu'elle est présente dans la composition élastomérique, possède au moins une quelconque des caractéristiques suivantes :
- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

De préférence, lorsqu'une huile plastifiante est présente dans la composition élastomérique, elle peut être choisie dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

### Système de réticulation

La composition élastomérique de l'invention comprend au moins un système de réticulation.

Le système de réticulation peut être tout type de système connu de l'homme de l'art dans le domaine des compositions élastomériques pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels que l'oxyde de zinc, l'acide stéarique ou des composés équivalents tels que les sels d'acide stéarique et les sels de métaux de transition, les dérivés guanidiques (en particulier la diphénylguanidine), ou encore des retardateurs de vulcanisation connus.

Préférentiellement, dans les compositions élastomériques de l'invention, le système de réticulation est un système de vulcanisation. Le soufre est utilisé à un taux préférentiel compris de 0,5 à 12 pce, en particulier de 1 à 10 pce. L'accélérateur de vulcanisation est utilisé à un taux préférentiel compris dans un domaine allant de 0,5 à 10 pce, plus préférentiellement de 0,5 à 5,0 pce.

On peut utiliser comme accélérateur tout composé susceptible d'agir comme accélérateur de vulcanisation d'élastomères diéniques en présence de soufre, notamment des accélérateurs du type thiazoles, des accélérateurs de types sulfénamides, des accélérateurs du type thiurames, des accélérateurs du type dithiocarbamates, des accélérateurs du type dithiophosphates, des accélérateurs du type thiourées, des accélérateurs du type xanthates et leurs mélanges. A titre d'exemples de tels accélérateurs, on peut citer notamment les composés suivants : N-cyclohexyl-2-benzothiazyle sulfénamide (« CBS »), N,N-dicyclohexyl-2-benzothiazyle sulfénamide (« DCBS »), N-ter-butyl-2-benzothiazyle sulfénamide (« TBBS »), N-ter-butyl-2-benzothiazyle sulfénimide (« TBSI ») et les mélanges de ces composés.

### Autres additifs

Les compositions élastomériques de l'invention peuvent comporter optionnellement également tout ou partie des additifs usuels, connus de l'homme de l'art et habituellement utilisés dans les bandes de roulement, comme par exemple des agents de mise en œuvre (ou « processing aids ») en anglais, des charges (renforçantes ou non renforçantes / autres que celles précitées), des pigments, des agents de protection tels que cires anti-ozone, anti-ozonants chimiques (6PPD, TMQ), anti-oxydants, des agents anti-fatigue et des résines renforçantes (telles que décrites par exemple dans la demande WO 02/10269).

### Fabrication des compositions

Les compositions élastomériques de l'invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment les différents élastomères diéniques, la ou les charges renforçantes, éventuelles, les éventuels autres additifs divers, à l'exception du système de vulcanisation. L'incorporation de la silice aux élastomères peut être réalisée en une ou plusieurs fois en malaxant thermomécaniquement. La phase non-productive peut être réalisée à haute température, jusqu'à une température maximale comprise dans un domaine allant de 110°C à 200°C, de préférence allant de 130°C à 185°C, pendant une durée généralement comprise dans un domaine allant de 2 à 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple comprise dans un domaine allant de 40°C à 100°C. On incorpore alors le système de vulcanisation, et le tout est alors mélangé pendant quelques minutes, par exemple de 5 à 15 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable, plus particulièrement comme une bande de roulement de pneumatique de véhicule portant de lourdes charges. Ces semi-finis peuvent ensuite être utilisés pour la fabrication de pneumatiques, selon les techniques connues de l'homme du métier.

La composition élastomérique peut être soit à l'état cru (avant vulcanisation), soit à l'état cuit (après vulcanisation), peut être un produit semi-fini, en particulier une bande de roulement, qui peut être utilisé dans un pneumatique.

La vulcanisation de la composition élastomérique peut être conduite de manière connue de l'homme du métier, par exemple à une température comprise dans un domaine allant de 130°C à 200°C, sous pression.

### Bande de roulement et pneumatique

Un autre objet de la présente invention est une bande de roulement comprenant au moins une composition telle que définie ci-dessus, y compris dans ces modes préférentiels. La bande de roulement du pneumatique équipant un véhicule portant de lourdes charges comporte une surface de roulement destinée à être en contact avec le sol lorsque ce pneumatique roule. La bande de roulement est pourvue d'une sculpture comprenant notamment des éléments de sculpture ou blocs élémentaires délimités par diverses rainures principales, longitudinales ou circonférentielles, transversales ou encore obliques, les blocs élémentaires pouvant en outre comporter diverses incisions ou lamelles plus fines. Les rainures constituent des canaux destinés à évacuer l'eau lors d'un roulage sur sol mouillé et les parois de ces rainures définissent les bords d'attaque et de fuite des éléments de sculpture, en fonction du sens du virage.

La bande de roulement de l'invention peut être constituée de la seule et même composition élastomérique telle que décrite ci-dessus. Elle peut aussi également, et avantageusement, comprendre plusieurs portions (ou couches) de compositions identiques ou différentes, par exemple deux, trois ou plusieurs couches, superposées les unes sur les autres dans la direction radiale. En d'autres termes, les portions (ou couches) sont parallèles, au moins sensiblement, entre elles, ainsi qu'au plan tangentiel (ou longitudinal), plan défini comme étant orthogonal à la direction radiale.

Ainsi, les compositions élastomériques décrites ci-dessus peuvent être présentes dans la totalité de la bande de roulement du pneumatique selon l'invention.

Un autre objet de la présente invention est un pneumatique comprenant au moins une composition élastomérique telle que définie ci-dessus, y compris ces modes de réalisations préférées ou comprenant une bande de roulement telle que définie ci-dessus. Un pneumatique ayant une géométrie de révolution par rapport à un axe de rotation, sa géométrie est décrite usuellement dans un plan méridien contenant l'axe de rotation du pneumatique. Pour un plan méridien donné, les directions radiale, axiale et circonférentielle désignent respectivement les directions perpendiculaires à l'axe de rotation du pneumatique, parallèles à l'axe de rotation du pneumatique et perpendiculaires au plan méridien. Par convention, les expressions « radialement intérieur, respectivement radialement extérieur » signifient « plus proche, respectivement plus éloigné de l'axe de rotation du pneumatique ». Par « axialement intérieur, respectivement axialement extérieur », on entend « plus proche, respectivement plus éloigné du plan équatorial du pneumatique », le plan équatorial du pneumatique étant le plan passant par le milieu de la surface de roulement du pneumatique et perpendiculaire à l'axe de rotation du pneumatique.

L'invention concerne les pneumatiques tant à l'état cru (c'est à dire, avant cuisson) qu'à l'état cuit (c'est à dire, après vulcanisation).

L'invention est en outre illustrée par les exemples suivants, qui doivent être considérés uniquement comme des illustrations et non limitatifs de l'invention en aucune manière.

### EXEMPLES

Les propriétés des compositions élastomériques décrites dans les exemples ont été évaluées comme décrit ci-dessous et ces procédés utilisés conviennent pour la mesure des propriétés revendiquées de l'invention revendiquée.

### Méthode de mesure :

### Calorimétrie différentielle

La température de transition vitreuse (Tg) des élastomères, des résines et des huiles plastifiantes est déterminée à l'aide d'un calorimètre différentiel (« differential scanning calorimeter »), selon la norme ASTM D3418-08 (2008).

### Microstructure des élastomères

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### Propriétés dynamiques

Les propriétés dynamiques sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10 Hz, à une température de 60°C pour les mesures de G*. On effectue un balayage en amplitude de déformation de 0,1% à 100% crête-crête (cycle aller) puis de 100% à 0,1% crête-crête (cycle retour). Les résultats exploités sont le module de complexe de cisaillement dynamique, cycle aller, (G*) à 60°C à 50% de déformation.

Les résultats de G*50% à 60°C sont indiqués en base 100. La valeur arbitraire 100 étant attribuée au témoin pour calculer et comparer ensuite le G*50% à 60°C des différents échantillons testés. La valeur en base 100 pour l'échantillon à tester est calculée selon l'opération : (valeur de G*50% en MPa de l'échantillon à tester / valeur de G*50% en MPa du témoin) × 100. De cette façon, un résultat inférieur à 100 indiquera une diminution G*50% à 60°C, qui correspond à une diminution de la rigidité. Inversement, un résultat supérieur à 100 indiquera une augmentation de G*50% à 60°C,ce qui correspond à une augmentation de la rigidité.

On effectue un balayage en température de -70°C à +70°C avec une rampe de +1.5°C/min sous une contrainte fixe de 0,7 MPa sur le même échantillon et sur le même viscoanalyseur et on enregistre la valeur du facteur de perte tan(δ) lue à -10°C.

Les résultats de tan(δ) à -10°C sont exprimés en base 100, la valeur 100 étant attribuée au témoin. La valeur arbitraire 100 est attribuée au témoin pour calculer et comparer ensuite le tan(δ) à -10°C des différents échantillons testés. La valeur en base 100 pour l'échantillon à tester est calculée selon l'opération : (valeur de tan(δ) à -10°C de l'échantillon à tester / valeur de tan(δ) à -10°C du témoin) × 100. Un résultat supérieur à 100 indique une performance améliorée, c'est-à-dire que la composition de l'exemple considéré traduit une meilleure adhérence sur sol mouillé de la bande de roulement comportant une telle composition.

### Résistance à la fissuration

La mesure de la résistance à la fissuration s'effectue de la façon suivante. On détermine, à 100°C, la force à exercer pour obtenir la rupture (FRD, en Mpa (en N/mm)) et on mesure, à 100°C, la déformation à rupture (DRD, en %). On utilise pour ce faire une éprouvette de dimensions 10 x 105 x 2,5 mm entaillée au centre de sa longueur par 3 entailles sur une profondeur de 5 mm, pour provoquer la rupture de l'éprouvette. Ainsi on peut déterminer l'énergie pour provoquer la rupture (énergie de rupture) de l'éprouvette qui est le produit du FRD et DRD. La force à exercer pour obtenir la rupture et la déformation à rupture sont mesurées sur une éprouvette étirée à 375 mm/min pour provoquer la rupture de l'éprouvette.

Les résultats sont indiqués en base 100, la valeur arbitraire 100 étant attribuée au témoin pour calculer et comparer l'énergie rupture des différents échantillons testés. La valeur en base 100 pour l'échantillon à tester est calculée selon l'opération : (valeur de l'énergie de rupture l'échantillon à tester / valeur de l'énergie de rupture du témoin) × 100. De cette façon, un résultat inférieur à 100 indiquera une diminution de l'énergie de rupture et donc une diminution de la résistance à la fissuration. Inversement, un résultat supérieur à 100 indiquera une augmentation de l'énergie de rupture et donc une amélioration de la résistance à la fissuration.

### Résistance à l'abrasion

La résistance à l'abrasion est mesurée selon la norme NF ISO 4649 de novembre 2010 qui consiste à déterminer la perte en volume d'un échantillon après déplacement de 40 mètres linéaires sur du papier abrasif normé.

Plus particulièrement, la détermination de la perte de volume par abrasion est effectuée selon les indications de la norme NF ISO 4649 de novembre 2010 (méthode B), en utilisant un abrasimètre où l'éprouvette cylindrique est soumise à l'action d'une toile abrasive de grains P60 et fixée sur la surface d'un tambour tournant sous une pression de contact de 5 N (N=Newton) et pour une course de 40 m. On mesure une perte de masse de l'échantillon et on calcule la perte de volume d'après la masse volumique (ρ) du matériau constituant l'éprouvette. La masse volumique (ρ) du matériau constituant l'éprouvette est obtenue classiquement sur la base des fractions massiques de chaque constituant du matériau et de leur masse volumique (ρ) respective.

Les résultats sont indiqués en base 100, la valeur arbitraire 100 étant attribuée au témoin pour calculer et comparer ensuite le volume de perte de substance des différents échantillons testés. La valeur en base 100 pour l'échantillon à tester est calculée selon l'opération : (valeur du volume de perte de substance de l'échantillon à tester / valeur du volume de perte de substance du témoin) × 100. De cette façon, un résultat inférieur à 100 indiquera une diminution de la perte en volume et donc une amélioration de la résistance à l'abrasion, qui correspond à une amélioration de la performance de résistance à l'usure. Inversement, un résultat supérieur à 100 indiquera une augmentation de la perte en volume et donc une diminution de la résistance à l'abrasion, qui correspond à une baisse de la performance de résistance à l'usure.

### Essai A

Les exemples présentés ci-dessous ont pour objet de montrer l'amélioration de performances de deux compositions élastomériques pour bandes de roulement selon l'invention (composition C1 et C2) à une composition élastomérique pour bande de roulement non conforme à l'invention (composition T1).

Le tableau 1 fournit la formulation de la composition non conforme à l'invention T1 et des compositions conformes à l'invention C1 à C2. Les taux sont exprimés en pce.

**[Tableau 1]**

| | T1 | C1 | C2 |
|---|---|---|---|
| Caoutchouc naturel | 60 | 35 | 35 |
| SBR A (1) | 40 | 30 | 25 |
| SBR B (2) | (-) | 35 | 45 |
| Charge renforçante (3) | 4 | 4 | 4 |
| Charge renforçante (4) | 58 | 58 | 58 |
| DPG (5) | 0.8 | 0.8 | 0.8 |
| Silane (6) | 5.4 | 5.4 | 5.4 |
| Anti-oxydant (7) | 2.0 | 2.0 | 2.0 |
| Paraffine | 1.0 | 1.0 | 1.0 |
| Acide stéarique | 2.0 | 2.0 | 2.0 |
| ZnO | 0.6 | 0.6 | 0.6 |
| Accélérateur (8) | 0.9 | 0.9 | 0.9 |
| Soufre | 1.5 | 1.5 | 1.5 |

| | | | |
|---|---|---|---|
| (1) SBR solution fonctionnalisé par une fonction amino-alcoxysilane en milieu de chaîne, non étendu, avec un taux de liaisons vinyliques de 12,7% en poids par rapport au poids de la partie butadiénique; 2,5% de motifs styrène par rapport au poids total dudit SBR et une Tg = -88°C mesurée selon la norme décrite dans la description. La répartition des espèces après fonctionnalisation est de 86% de chaînes fonctionnelles dont 77% sont fonctionnelles en milieu de chaîne et 14% de chaînes non fonctionnes étoilées, (2) SBR solution non fonctionnel, non étendu, avec 24% en mol de motifs polybutadiène 1,2 ; 26,5% en poids de motifs styrène par rapport au poids total de l'élastomère et une Tg = -48°C , (3) Noir de carbone grade ASTM N134 vendu par Cabot (4) Silice « Zeosil 1165 MP » type « HDS » de la société Solvay ayant une CTAB de 160 m²/g mesurée selon la méthode décrite dans la description (5) Diphénylguanidine (« Perkacit » DPG de la société Flexsys) (6) Agent de couplage : TESPD (« Si75 » de la société Evonik - Degussa) (7) N-1,3-diméthylbutyl-N-phényl-para-phénylènediamine commercialisée par la société Flexsys sous la dénomination "Santoflex 6-PPD". (8) N-dicyclohexyl-2-benzothiazol-sulfenamide : « Santocure CBS » de la société Flexsys. | | | |

Pour obtenir les compositions ci-dessus, on procède de la manière suivante: on introduit dans un mélangeur interne Polylab de 85 cm³, rempli à 70% et dont la température initiale de cuve est d'environ 110°C, le ou les élastomères diéniques fonctionnalisés ou non, la ou les charges renforçantes éventuelles, l'agent de couplage éventuel puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de « tombée » de 160°C.

On récupère le mélange ainsi obtenu, on le refroidit puis on ajoute le système de vulcanisation (soufre et accélérateur) sur un mélangeur externe (homo-finisseur) à 25°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques porteurs de lourdes charges.

Les propriétés des compositions élastomériques après cuisson à 140°C pendant 30 min sont présentées dans le tableau 2 ci-dessous.

**[Tableau 2]**

| | T1 | C1 | C2 |
|---|---|---|---|
| G*50% en base 100 | 100 | 105 | 105 |
| Energie de rupture en base 100 | 100 | 162 | 181 |
| Résistance à l'abrasion en base 100 | 100 | 96 | 105 |
| tan(δ)-10°C en base 100 | 100 | 131 | 180 |

De manière surprenante, les compositions élastomériques de l'invention (compositions C1 et C2) présentent une amélioration de la résistance à la fissuration (énergie de rupture) par rapport à la composition élastomérique non conforme (composition T1) pour une rigidité quasi-identique (G*50%) et sans pénalisation de l'usure (index d'abrasion).

Il est généralement connu de l'homme du métier que les pneumatiques qui présentent une bonne adhérence sur sol mouillé ont pour inconvénient d'avoir une résistance à l'usure pénalisée. De manière surprenante, les compositions de l'invention (compositions C1 et C2) présentent une bonne résistance à l'usure et également une amélioration de l'adhérence sur sol mouillé (tan(δ)-10°C) par rapport à la composition élastomérique de l'invention.

## Revendications

1. Composition élastomérique à base de :
a. 7 à 45 pce d'un premier élastomère diénique, ledit premier élastomère diénique étant un élastomère isoprénique,
b. 10 à 45 pce d'un second élastomère diénique, ledit second élastomère diénique étant un copolymère de butadiène et de monomères vinylaromatiques, lequel copolymère comprenant au sein de sa structure au moins un groupe alcoxysilane lié à l'élastomère par l'atome de silicium, et au moins une fonction comprenant un atome d'azote, et présentant une température de transition vitreuse strictement inférieure à -70°C mesurée selon la norme ASTM D3418-08 (2008),
c. 10 à 55 pce d'un troisième élastomère diénique non fonctionnalisé, ledit troisième élastomère diénique non fonctionnalisé étant un copolymère de butadiène et de monomères vinylaromatiques ayant une température de transition vitreuse strictement supérieure à -65°C et inférieure ou égale à -30°C mesurée selon la norme ASTM D3418-08 (2008),
d. 0 à 5 pce d'un quatrième élastomère diénique, ledit quatrième élastomère diénique étant un polybutadiène,
e. 40 à 85 pce de silice à titre de charge renforçante,
f. au moins un agent de couplage de la silice à au moins l'un desdits élastomères diéniques,
g. 0 à 9 pce d'au moins un plastifiant,
h. au moins un système de réticulation.

2. Composition selon la revendication 1, dans lequel le taux du premier élastomère diénique dans la composition élastomérique est compris dans un domaine allant de 8 à 43 pce, plus préférentiellement est compris dans un domaine allant de 10 à 40 pce.

3. Composition selon l'une quelconque des revendications précédentes, dans lequel le taux du second élastomère diénique dans la composition élastomérique est compris dans un domaine allant de 15 à 40 pce, plus préférentiellement est compris dans un domaine allant de 20 à 37 pce.

4. Composition selon l'une quelconque des revendications précédentes, dans lequel le taux du troisième élastomère diénique dans la composition élastomérique est compris dans un domaine allant de 20 à 53 pce, plus préférentiellement dans un domaine allant de 30 à 50 pce.

5. Composition selon l'une quelconque des revendications précédentes, dans lequel le premier élastomère diénique est choisi dans le groupe constitué par le caoutchouc naturel, les polyisoprènes de synthèse et le mélange de ces élastomères, de préférence le premier élastomère est le caoutchouc naturel.

6. Composition selon l'une quelconque des revendications précédentes, dans lequel le second élastomère diénique a une température de transition vitreuse comprise dans un domaine allant de -110°C à moins de -70°C, de préférence allant de -100°C à -75°C, plus préférentiellement encore allant de -95°C à -80°C.

7. Composition selon l'une quelconque des revendications précédentes, dans lequel le troisième élastomère diénique non fonctionnalisé a une température de transition vitreuse comprise dans un domaine allant de -60°C à -40°C, de préférence allant de - 50°C à -40°C.

8. Composition selon l'une quelconque des revendications précédentes, dans lequel la fonction comprenant un atome d'azote est portée par le groupe alcoxysilane par l'intermédiaire d'un groupe espaceur qui est un alcanediyle en C1-C10, plus préférentiellement un alcanediyle en C1-C4.

9. Composition selon l'une quelconque des revendications précédentes, dans lequel le taux de monomères vinylaromatiques dans le second élastomère diénique est compris dans un domaine allant de 0,5 à 5% en poids par rapport au poids dudit second élastomère diénique, plus préférentiellement dans un domaine allant de 1 à 4% en poids.

10. Composition selon l'une quelconque des revendications précédentes, dans lequel le taux de silice dans la composition élastomérique est compris dans un domaine allant de 45 à 80 pce, plus préférentiellement allant de 50 à 75 pce.

11. Composition selon l'une quelconque des revendications précédentes, dans lequel la composition élastomérique ne comprend pas de polybutadiène.

12. Composition selon l'une quelconque des revendications précédentes, dans lequel la composition élastomérique ne comprend pas de plastifiant.

13. Composition selon l'une quelconque des revendications précédentes, dans lequel la composition élastomérique comprend en outre de 0,5 à 15 pce, de préférence 0,7 à 10 pce de noir de carbone.

14. Bande de roulement comprenant au moins une composition selon l'une des revendications précédentes 1 à 13.

15. Pneumatique comprenant au moins une composition selon l'une quelconque des revendications précédentes 1 à 13 ou comprenant une bande de roulement selon la revendication 14.

## Patentansprüche

1. Elastomerzusammensetzung auf Basis von:
a. 7 bis 45 phe eines ersten Dienelastomers, wobei es sich bei dem ersten Dienelastomer um ein Isoprenelastomer handelt,
b. 10 bis 45 phe eines zweiten Dienelastomers, wobei es sich bei dem zweiten Dienelastomer um ein Copolymer von Butadien und vinylaromatischen Monomeren handelt, wobei das Copolymer in seiner Struktur mindestens eine Alkoxysilangruppe, die über das Siliciumatom an das Elastomer gebunden ist, und mindestens eine Funktion, die ein Stickstoffatom umfasst, umfasst und eine gemäß der ASTM-Norm D3418-08 (2008) gemessene Glasübergangstemperatur von streng kleiner -70 °C aufweist,
c. 10 bis 55 phe eines dritten nichtfunktionalisierten Dienelastomers, wobei es sich bei dem dritten nichtfunktionalisierten Dienelastomer um ein Copolymer von Butadien und vinylaromatischen Monomeren mit einer gemäß der ASTM-Norm D3418-08 (2008) gemessenen Glasübergangstemperatur von streng größer -65 °C und kleiner oder gleich -30 °C handelt,
d. 0 bis 5 phe eines vierten Dienelastomers, wobei es sich bei dem vierten Dienelastomer um ein Polybutadien handelt,
e. 40 bis 85 phe Kieselsäure als verstärkendem Füllstoff,
f. mindestens einem Mittel zum Kuppeln der Kieselsäure an mindestens eines der Dienelastomere,
g. 0 bis 9 phe mindestens eines Weichmachers,
h. mindestens einem Vernetzungssystem.

2. Zusammensetzung nach Anspruch 1, wobei der Gehalt des ersten Dienelastomers in der Elastomerzusammensetzung in einem Bereich von 8 bis 43 phe, weiter bevorzugt in einem Bereich von 10 bis 40 phe, liegt.

3. Zusammensetzung nach einem der vorhergehenden Ansprüche, wobei der Gehalt des zweiten Dienelastomers in der Elastomerzusammensetzung in einem Bereich von 15 bis 40 phe, weiter bevorzugt in einem Bereich von 20 bis 37 phe, liegt.

4. Zusammensetzung nach einem der vorhergehenden Ansprüche, wobei der Gehalt des dritten Dienelastomers in der Elastomerzusammensetzung in einem Bereich von 20 bis 53 phe, weiter bevorzugt in einem Bereich von 30 bis 50 phe, liegt.

5. Zusammensetzung nach einem der vorhergehenden Ansprüche, wobei das erste Dienelastomer aus der Gruppe bestehend aus Naturkautschuk, synthetischen Polyisoprenen und der Mischung dieser Elastomere ausgewählt ist, es sich vorzugsweise bei dem ersten Elastomer um Naturkautschuk handelt.

6. Zusammensetzung nach einem der vorhergehenden Ansprüche, wobei das zweite Dienelastomer eine Glasübergangstemperatur in einem Bereich von -110 °C bis weniger als -70 °C, vorzugsweise von -100 °C bis -75 °C, noch weiter bevorzugt von -95 °C bis -80 °C, aufweist.

7. Zusammensetzung nach einem der vorhergehenden Ansprüche, wobei das dritte nichtfunktionalisierte Dienelastomer eine Glasübergangstemperatur in einem Bereich von -60 °C bis -40 °C, vorzugsweise von -50 °C bis -40 °C, aufweist.

8. Zusammensetzung nach einem der vorhergehenden Ansprüche, wobei die Funktion, die ein Stickstoffatom umfasst, über eine Spacergruppe, bei der es sich um ein C1-C10-Alkandiyl, weiter bevorzugt ein C1-C4-Alkandiyl handelt, an die Alkoxysilangruppe gebunden ist.

9. Zusammensetzung nach einem der vorhergehenden Ansprüche, bei der der Gehalt an vinylaromatischen Monomeren in dem zweiten Dienelastomer in einem Bereich von 0,5 bis 5 Gew.-%, bezogen auf das Gewicht des zweiten Dienelastomers, weiter bevorzugt in einem Bereich von 1 bis 4 Gew.-%, liegt.

10. Zusammensetzung nach einem der vorhergehenden Ansprüche, wobei der Gehalt der Kieselsäure in der Elastomerzusammensetzung in einem Bereich von 45 bis 80 phe, weiter bevorzugt von 50 bis 75 phe, liegt.

11. Zusammensetzung nach einem der vorhergehenden Ansprüche, wobei die Elastomerzusammensetzung kein Polybutadien umfasst.

12. Zusammensetzung nach einem der vorhergehenden Ansprüche, wobei die Elastomerzusammensetzung keinen Weichmacher umfasst.

13. Zusammensetzung nach einem der vorhergehenden Ansprüche, wobei die Elastomerzusammensetzung außerdem 0,5 bis 15 phe, vorzugsweise 0,7 bis 10 phe, Ruß umfasst.

14. Lauffläche, umfassend mindestens eine Zusammensetzung nach einem der vorhergehenden Ansprüche 1 bis 13.

15. Reifen, umfassend mindestens eine Zusammensetzung nach einem der vorhergehenden Ansprüche 1 bis 13 oder umfassend eine Lauffläche nach Anspruch 14.

## Claims

1. Elastomeric composition based on:
a. from 7 to 45 phr of a first diene elastomer, said first diene elastomer being an isoprene elastomer,
b. from 10 to 45 phr of a second diene elastomer, said second diene elastomer being a copolymer of butadiene and of vinylaromatic monomers, which copolymer comprising, within its structure, at least one alkoxysilane group bonded to the elastomer by the silicon atom and at least one function comprising a nitrogen atom, and exhibiting a glass transition temperature of strictly less than -70°C, measured according to the Standard ASTM D3418-08 (2008),
c. from 10 to 55 phr of a third non-functionalized diene elastomer, said third non-functionalized diene elastomer being a copolymer of butadiene and of vinylaromatic monomers having a glass transition temperature of strictly greater than -65°C and less than or equal to -30°C, measured according to the Standard ASTM D3418-08 (2008),
d. from 0 to 5 phr of a fourth diene elastomer, said fourth diene elastomer being a polybutadiene,
e. from 40 to 85 phr of silica as reinforcing filler,
f. at least one agent for coupling silica to at least one of said diene elastomers,
g. from 0 to 9 phr of at least one plasticizer,
h. at least one crosslinking system.

2. Composition according to Claim 1, in which the content of the first diene elastomer in the elastomeric composition is within a range extending from 8 to 43 phr, more preferentially is within a range extending from 10 to 40 phr.

3. Composition according to any one of the preceding claims, in which the content of the second diene elastomer in the elastomeric composition is within a range extending from 15 to 40 phr, more preferentially is within a range extending from 20 to 37 phr.

4. Composition according to any one of the preceding claims, in which the content of the third diene elastomer in the elastomeric composition is within a range extending from 20 to 53 phr, more preferentially in a range extending from 30 to 50 phr.

5. Composition according to any one of the preceding claims, in which the first diene elastomer is selected from the group consisting of natural rubber, synthetic polyisoprenes and the mixture of these elastomers; preferably, the first elastomer is natural rubber.

6. Composition according to any one of the preceding claims, in which the second diene elastomer has a glass transition temperature within a range extending from -110°C to less than -70°C, preferably extending from -100°C to -75°C, more preferentially still extending from -95°C to -80°C.

7. Composition according to any one of the preceding claims, in which the third non-functionalized diene elastomer has a glass transition temperature within a range extending from -60°C to -40°C, preferably extending from -50°C to -40°C.

8. Composition according to any one of the preceding claims, in which the function comprising a nitrogen atom is borne by the alkoxysilane group via a spacer group which is a C₁-C₁₀ alkanediyl, more preferentially a C₁-C₄ alkanediyl.

9. Composition according to any one of the preceding claims, in which the content of vinylaromatic monomers in the second diene elastomer is within a range extending from 0.5% to 5% by weight, with respect to the weight of said second diene elastomer, more preferentially in a range extending from 1% to 4% by weight.

10. Composition according to any one of the preceding claims, in which the content of silica in the elastomeric composition is within a range extending from 45 to 80 phr, more preferentially extending from 50 to 75 phr.

11. Composition according to any one of the preceding claims, in which the elastomeric composition does not comprise a polybutadiene.

12. Composition according to any one of the preceding claims, in which the elastomeric composition does not comprise a plasticizer.

13. Composition according to any one of the preceding claims, in which the elastomeric composition additionally comprises from 0.5 to 15 phr, preferably from 0.7 to 10 phr, of carbon black.

14. Tread comprising at least a composition according to one of the preceding Claims 1 to 13.

15. Tyre comprising at least a composition according to any one of the preceding Claims 1 to 13 or comprising a tread according to Claim 14.
